# EUROPEAN PATENT APPLICATION

(11) **EP 2 782 165 A1**
(43) Date of publication of application: **24.09.2014**
(21) Application number: 14161087.3
(22) Date of filing: 21.03.2014
(51) Int. Cl.: H01M 2/34, H01M 10/42, H01M 10/04, H05K 1/16

(54) **Protection apparatus for battery pack, method for manufacturing the protection apparatus, and battery pack having the protection apparatus**

(30) Priority: 22.03.2013 KR 20130030782
(71) Applicant: SAMSUNG SDI CO., LTD., Yongin-si, Gyeonggi-do (KR)
(72) Inventor: HWANG, Yu-Sik, Yongin-si (Gyeonggi-do) (KR)
(74) Representative: Santarelli

(57) **Abstract**

A protection apparatus (100) for a battery pack (200) includes a conduction portion (110) including a pad portion (111), and a connection portion (112) outside of the pad portion (111) and electrically coupled to the pad portion (111); and an insulation portion (120) covering at least a portion of the conduction portion (110), wherein the pad portion (111) and the connection portion (112) are coplanar. A battery pack (200) comprising said protection apparatus (100) and a method for manufacturing said protection apparatus (100) are also disclosed.

## Description

### BACKGROUND

### 1. Field

Aspects of the present invention relate to a protection apparatus for a battery pack, a method for manufacturing the protection apparatus, and a battery pack having the protection apparatus.

### 2. Description of the Related Art

Recently, secondary batteries have been variously used as power sources of portable electronic devices. As portable electronic devices have become used more frequently in a broad variety of fields, the demand for secondary batteries has rapidly increased. Secondary batteries can be charged/discharged a plurality of times, and accordingly are economically and environmentally efficient. Thus, the use of the battery packs is encouraged.

Because there is typically a desire for electronic devices with a relatively small size and light weight, there is a corresponding desire for secondary batteries with a small size and light weight. However, because materials commonly used in secondary batteries, such as lithium, tend to have high reactivity inside of the secondary battery, the small size and light weight of the secondary battery is limited due to the safety of the secondary battery. There is a desire, therefore, to develop a battery pack that can be implemented as a small and light battery pack while improving the safety of the secondary battery.

Meanwhile, the battery pack further includes a protection apparatus and the like.

### SUMMARY

Embodiments of the present invention provide a protection apparatus for a battery pack, a method for manufacturing the protection apparatus, and a battery pack having the protection apparatus, which are relatively light in weight and relatively small in size.

Embodiments of the present invention also provide a protection apparatus for a battery pack, a method for manufacturing the protection apparatus, and a battery pack having the protection apparatus, which can improve safety by providing the protection apparatus for the battery pack.

According to an embodiment of the present invention, there is provided a protection apparatus for a battery pack, the protection apparatus comprising: a conduction portion comprising a pad portion and a connection portion outside of the pad portion and electrically coupled to the pad portion, and an insulation portion covering at least a portion of the conduction portion, wherein the pad portion and the connection portion are coplanar.

According to embodiments of the present invention, the pad portion and the connection portion in the conduction portion are, for example, positioned on the same plane, so that it is possible to implement miniaturization of the protection apparatus and to provide convenience in manufacturing the protection apparatus.

The conduction portion may further comprise a pattern portion electrically coupled to the pad portion and the connection portion.

The protection apparatus may further comprise an electronic device positioned on the conduction portion, wherein the insulation portion covers the electronic device.

Different sections of the conduction portion may be electrically coupled to each other through the electronic device.

The protection apparatus may further comprise a wiring portion coupling different sections of the conduction portion to each other.

At least a first portion of the connection portion may be covered by the insulation portion, and at least a second portion of the connection portion may be exposed with respect to the insulation portion.

The conduction portion may further comprise a support portion that is at least partially covered by the insulation portion, and an end of the support portion is exposed with respect to the insulation portion, and wherein an exposed surface at the end of the support portion may be coplanar with a surface of the insulation portion.

The insulation portion may comprise an opening through which the pad portion is exposed.

According to another embodiment of the present invention, there is provided a battery pack that includes the protection apparatus as defined above.

For example, the battery pack further comprise a bare cell having a negative electrode terminal at an upper surface thereof, and the connection portion is coupled to the negative electrode terminal, and wherein the protection apparatus may be biased to one side of the bare cell, based on the negative electrode terminal.

According to another embodiment of the present invention, there is provided a method for manufacturing a protection apparatus for a battery pack, the method comprising: patterning a conduction plate to form a conduction portion, the conduction portion comprising a pad portion and a connection portion outside of the pad portion; and forming an insulation portion over at least a portion of the conduction portion.

Patterning the conduction plate may further comprise forming a pattern portion between the pad portion and the connection portion.

The method may further comprise positioning an electronic device on the conduction portion, after forming of the conduction portion.

Sections of the conduction portion may be electrically coupled to each other through the electronic device.

The method may further comprise electrically coupling portions of the conduction portion through a wiring portion, after forming the conduction portion.

In the forming of the insulation portion, a portion of the connection portion may be covered by the insulation portion, and another portion of the connection portion may be exposed with respect to the insulation portion.

The method may further comprise forming an opening through the insulation portion to expose the pad portion, after forming the insulation portion.

Forming the conduction portion may further comprise: forming a frame portion at a periphery of the pad portion and the connection portion; and forming a support portion coupling the frame portion to the pad portion and the connection portion.

The method may further comprise cutting the support portion, after forming of the insulation portion, to separate the pad portion and the connection portion from the frame portion.

Other features and aspects of the present invention will become more fully apparent from the following detailed description, taken in conjunction with the accompanying drawings.

Terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### BRIEF DESCRIPTION OF THE DRAWINGS

The accompanying drawings, together with the specification, illustrate exemplary embodiments of the present invention, and, together with the description, serve to explain the principles of the embodiments of the present invention.
FIG. 1 is a perspective view of a protection apparatus for a battery pack according to an embodiment of the present invention.
FIG. 2 is a sectional view taken along line A-A' of the protection apparatus shown in FIG. 1.
FIG. 3 is a sectional view showing a modification of the protection apparatus shown in FIG. 2.
FIG. 4 is a plan view showing a conduction portion, an electronic device and a wiring portion in the protection apparatus shown in FIG. 1.
FIGS. 5A to 8B are views illustrating a method for manufacturing the protection apparatus according to an embodiment of the present invention.
FIG. 9 is an exploded perspective view of a battery pack having the protection apparatus according to an embodiment of the present invention.

### DETAILED DESCRIPTION

In the following detailed description, only certain exemplary embodiments of the present invention are shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements. In the drawings, the thickness or size of layers are exaggerated for clarity and not necessarily drawn to scale.

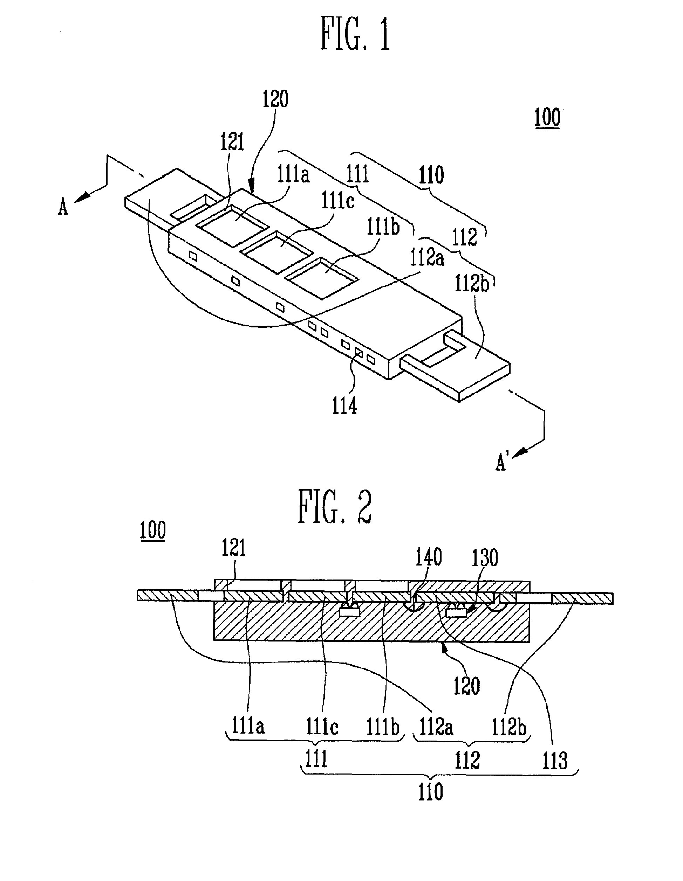

FIG. 1 is a perspective view of a protection apparatus 100 for a battery pack according to an embodiment of the present invention. FIG. 2 is a sectional view taken along line A-A' of the protection apparatus 100 shown in FIG. 1. Hereinafter, the protection apparatus 100 according to this embodiment will be described with reference to FIGS. 1 and 2.

As shown in FIGS. 1 and 2, the protection apparatus 100 according to this embodiment includes a conduction portion 110 including a pad portion or pad 111 and a connection portion or connector 112, an insulation portion 120 covering the conduction portion 110, an electronic device 130 positioned on the conduction portion 110, and a wiring portion or wire 140. The pad portion 111 and the connection portion 112 may be positioned on the same plane. That is, the pad portion 111 and the connection portion 112 are coplanar. For example, the pad portion 111 and the connection portion 112 perform the function of a protective circuit module (PCM).

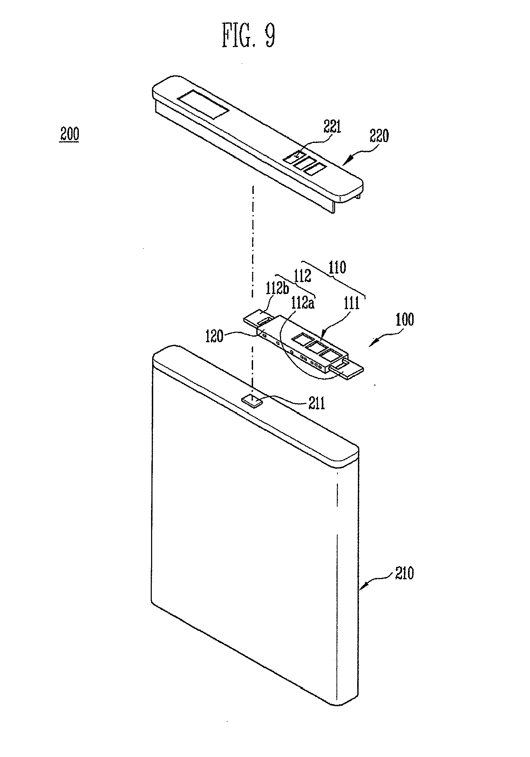

The conduction portion 110 is a member that allows power from a bare cell 210 (see FIG. 9) to be conducted therethrough.

Here, the conduction portion 110 includes the pad portion 111, and the connection portion 112 electrically couples the pad portion 111 and the bare cell 210 to each other. In this case, the pad portion 111 and the connection portion 112 are positioned on the same plane. That is, the pad portion 111 and the connection portion 112 are positioned at the same height or are coplanar. The pad portion 111 and the connection portion 112 are for example formed from one conduction plate so as to be made of the same material. The connection portion 112 are here positioned at opposite ends or sides of the pad portion 111. Therefore, the power from the bare cell 210 can be coupled from a negative electrode terminal 211 (see FIG. 9) to a positive electrode terminal or a can through the connection portion 112 at one side of the pad portion 111, the pad portion 111 and the connection portion 112 at the other side of the pad portion 111. Meanwhile, the pad portion 111 is a member which becomes a portion that enables coupling a battery pack 200 (see FIG. 9) to the outside (i.e., external components) when the battery pack 200 is manufactured. The pad portion 111 may include a P+ pad 111a, a P- pad 111b and a CF pad 111c that is a ground pad. The connection portion 112 may include a B- connection portion 112b coupled to the negative electrode terminal 211, and a B+ connection portion 112a coupled to the positive electrode terminal or can of the bare cell 210 (not shown).

The conduction portion 110 further includes, for example, a pattern portion 113 in addition to the pad portion 111 and the connection portion 112. Here, the pattern portion 113 performs the function of a circuit pattern positioned between the pad portion 111 and the connection portion 112 so as to couple the pad portion 111 to the connection portion 112.

The insulation portion 120 is a member positioned on the conduction portion 110 so as to cover at least one portion of the conduction portion 110.

Here, the insulation portion 120 is positioned on the conduction portion 110 through a process, e.g., molding, etc., thereby covering at least a portion of the conduction portion 110. In this case, the pad portion 111 and the pattern portion 113 are almost entirely covered by the insulation portion 120, and the connection portion 112 extends outside of the insulation portion 120. Hence, only one portion of the connection portion 112 is covered by the insulation portion 120. Therefore, the connection portion 112 has a shape protruding or extending outside of the insulation portion 120 such that a portion of the connection portion 112 is exposed through insulation portion 120. The protruded connection portion 112 can then be connected to the bare cell 210.

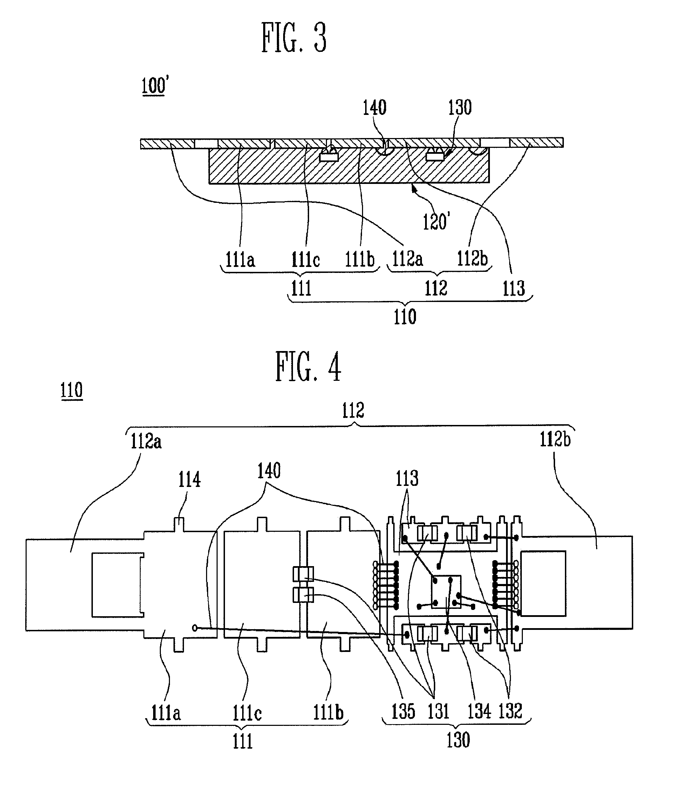

Meanwhile, an external device can be coupled to the pad portion 111, and hence the pad portion 111 can be exposed to the outside. Therefore, an opening 121 is formed in the insulation portion 120, and the pad portion 111 is exposed to the outside through the opening 121. The conduction portion 110 is for example provided with a support portion 114 having a shape that protrudes outward (see for example FIG. 4).

The support portion 114 is a portion coupled to a frame portion, which will be described later with respect to a method for manufacturing the protection apparatus 100. For example, the support portion 114 is exposed to the outside of the insulation portion 120. In this case, the protruded end of the support portion 114, i.e., the outer surface of the support portion 114 constitutes the same plane as the outer surface of the insulation portion 120. That is, the support portion 114 is coupled to the pad portion 111, the pattern portion 113 and the connection portion 112 so as to be covered by the insulation portion 120. In this case, only the surface of the end of the support portion 114 is exposed to the outside. The support portion 114 is a member which is integrally formed with the pad portion 111, the connection portion 112 and the pattern portion 113 and then separated from a frame portion 115 so that at least one of the pad portion 111, the connection portion 112 and the pattern portion 113 is separated from the others. The support portion 114 is for example formed to constitute the same plane as (i.e., coplanar with) the pad portion 111, the connection portion 112, and the pattern portion 113 (i.e., to be positioned at the same height as the pad portion 111, the connection portion 112 and the pattern portion 113) (see FIGS. 1 and 4).

FIG. 3 is a sectional view showing a modification of the protection apparatus 100 shown in FIG. 2. Hereinafter, an insulation portion 120' of the modified protection apparatus 100' will be described with reference to FIG. 3.

In FIG. 2, it has been described that the insulation portion 120 surrounds both surfaces (i.e., covers opposite surfaces) of the conduction portion 110, and accordingly, the opening 121 through which the pad portion 111 is exposed should be separately formed in the insulation portion 120. However, as shown in FIG. 3, an insulation portion 120' is implemented to cover a portion of only one surface of the conduction portion 110. In this case, it is apparent that the pad portion 111 is exposed toward the outside through the surface on which the insulation portion 120' is not formed. Thus, the process of separately forming the opening 121 is omitted, thereby further improving productivity.

FIG. 4 is a plan view showing the conduction portion 110, the electronic device 130, and the wiring portion 140 in the protection apparatus 100 shown in FIG. 1. Hereinafter, the electronic device 130 and the wiring portion 140 according to this embodiment will be described with reference to FIG. 4. Here, FIG. 4 is a view showing a state in which the insulation portion 120 is removed in the protection apparatus 100 shown in FIG. 1. The arrangement of the conduction portion 110, the electronic device 130 and the wiring portion 140, shown in FIG. 4, is merely one example.

The electronic device 130 is a member positioned on the conduction portion 110. The electronic device 130 constitutes a circuit together with the conduction portion 110 so as to control voltage or current in charging and discharging of the bare cell 210.

Here, the electronic device 130 can perform a function of controlling an electrode assembly in the bare cell 210 or cutting off a circuit when the electrode assembly is abnormally operated. Specifically, the electronic device 130 can block overcharging, overdischarging, short circuit and reverse voltage of the battery pack 200, thereby preventing or substantially preventing explosion, overheating, and leakage of the battery pack 200 and deterioration of charging/discharging characteristics. Further, the electronic device 130 can prevent or substantially prevent degradation of electrical performance and abnormal operation, thereby eliminating dangerous factors and extending the lifespan of the battery pack 200. The electronic device 130 comprises for example a switching device such as an integrated circuit (IC) 134 or a metal oxide semiconductor field effect transistor (MOSFET). Alternatively, the electronic device 130 comprises for example a resistor 131, a capacitor 132, a varistor 135, etc. The electrode device 130, as shown in FIG. 2, is covered by the insulation portion 120.

Meanwhile, the portions of the conduction portion 110 are coupled to each other through the electronic device 130. For example, the CF pad 111 c and the P-pad 111 b are coupled to each other through the resistor 131 and the varistor 135, and the P- pad 111 b, the pattern portion 113 and the B- connection portion 112b are coupled to one another through the IC 134. The pattern portion 113 is for example coupled through the resistor 131, the capacitor 132, etc. The arrangement of the electronic devices 130 may be appropriately made so that the protection apparatus 100 can be operated as a PCM of the battery pack 200.

The wiring portion 140 is a member that couples the portions of the conduction portion 110 to each other, and is implemented with, for example, a wire, lead, etc. For example, the P+ pad 111 a and the pattern portion 113 are coupled to each other through the wiring portion 140, and the protection apparatus 100 according to this embodiment assists the battery pack 200 to be relatively safely used through the coupling between the wiring portion 140 and the electronic device 130.

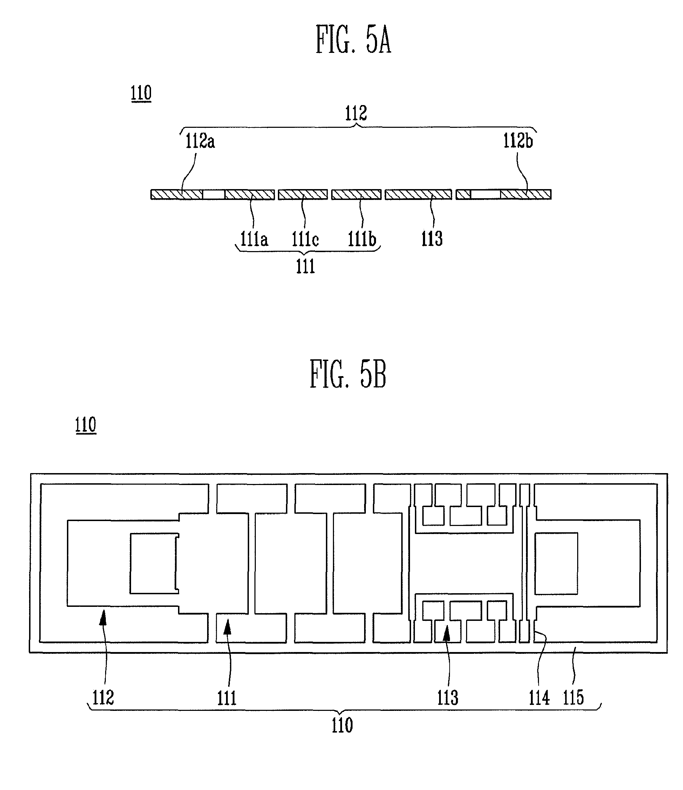

FIGS. 5A to 8B are views illustrating a method for manufacturing the protection apparatus 100 according to an embodiment of the present invention. Hereinafter, the method according to this embodiment will be described with reference to FIGS. 5A to 8B. Here, FIGS. 5A, 6A, 7A and 8A show sectional views, and FIGS. 5B, 6B, 7B and 8B show plan views.

First, as shown in FIGS. 5A and 5B, a conduction portion 110 is formed by preparing a conduction plate and patterning the conduction plate.

In this case, the conduction plate is patterned by cutting or etching the conduction plate. The conduction plate 110 including a pad portion 111 and a connection portion 112 is for example formed by patterning the conduction plate. The conduction portion 110 further includes a pattern portion 113, a frame portion 115 and a support portion 114. Specifically, the frame portion 115 is here positioned at the outside or periphery of the pad portion 111, the connection portion 112 and the pad portion 113, and the support portion 114 couples the pad portion 111, the connection portion 112 and the pattern portion 113 to the frame portion 115. Thus, the pad portion 111, the connection portion 112, and the pattern portion 113, patterned by the support portion 114 and the frame portion 115 can maintain a state in which the pad portion 111, the connection portion 112 and the pattern portion 113 are integrally coupled.

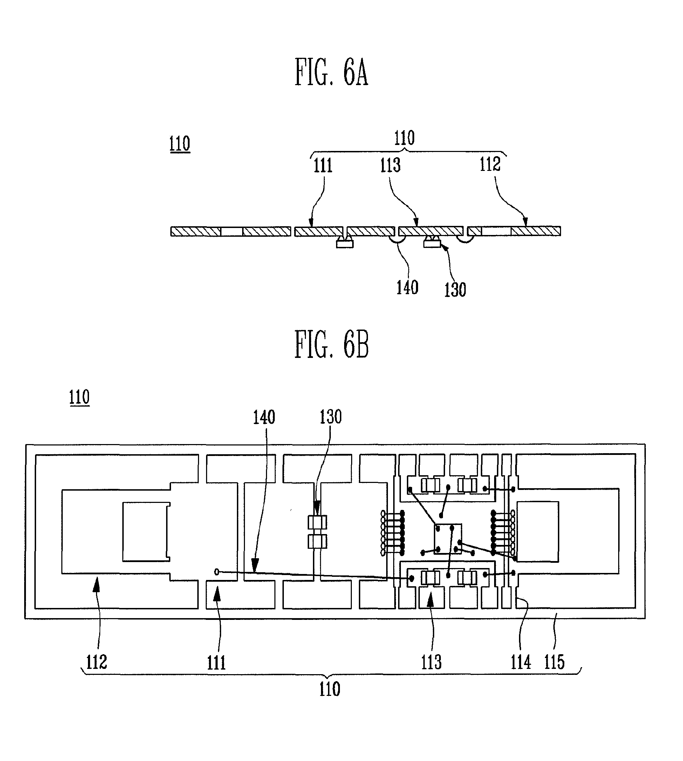

Next, as shown in FIGS. 6A and 6B, an electronic device 130 is mounted on or positioned on the conduction portion 110, and the conduction portion 110 and the electronic device 130 are coupled to each other through a wiring portion 140.

In this case, the portions of the conduction portion 110, including the pad portion 111, the connection portion 112, and the pattern portion 113, are electrically coupled to each other through the mounting of the electronic device 130 and the installation of the wiring portion 140. The mounting of the electronic device 130 and the installation of the wiring portion 140 is performed regardless of a processing order.

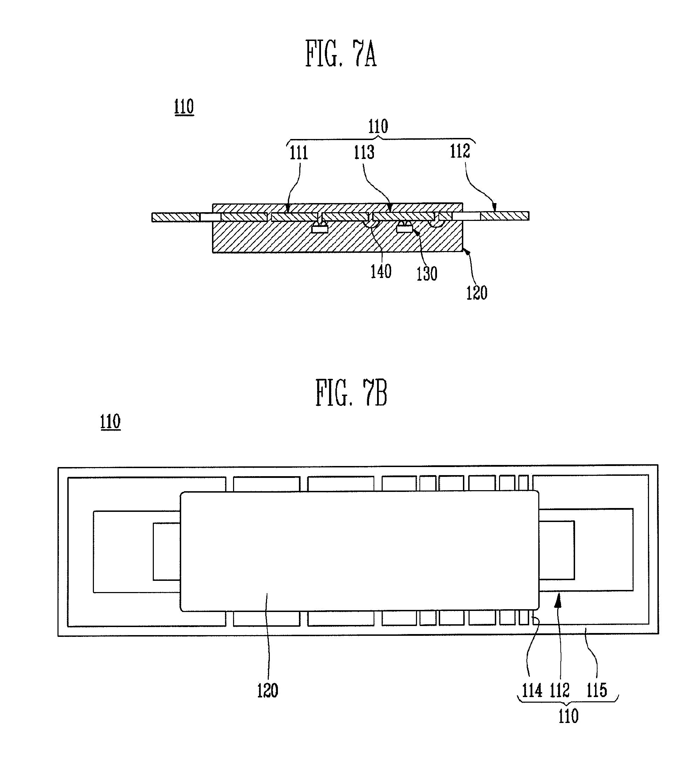

Next, as shown in FIGS. 7A and 7B, an insulation portion 120 is formed to cover at least a portion of the conduction portion 110.

In this case, the insulation portion 120 is formed through, for example, a molding process. Both surfaces of the conduction portion 110 are molded, or only one surface of the conduction portion 110 is molded. Meanwhile, in a case where the insulation portion 120 is formed, the pad portion 111 and the pattern portion 113 are completely covered by the insulation portion 120. The frame portion 115 is not covered at all, and only a portion of the support portion 114 and the connection portion 112 is covered. That is, the connection portion 112 maintains a state in which the connection portion 112 is exposed at opposite ends or sides of the insulation portion 120.

The wiring portion 140 coupling the conduction portion 110 to the electronic device 130 is for example positioned on the conduction portion 110 and is entirely covered or encapsulated by the insulation portion 120 so as not to be exposed to the outside.

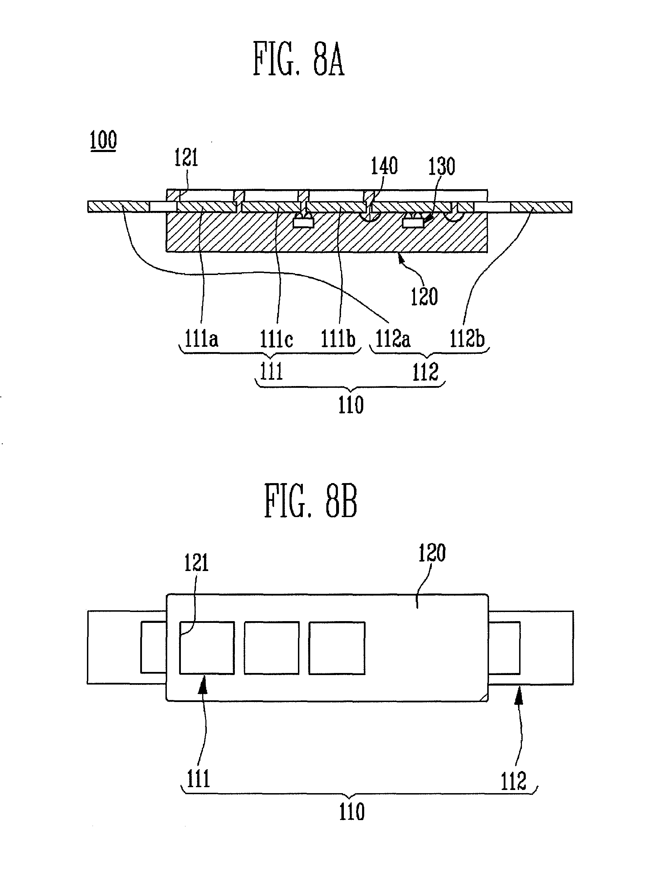

Next, as shown in FIGS. 8A and 8B, an opening 121 is formed in the insulation portion 120, and the support portion 114 is cut.

In this case, the opening 121 through which the pad portion 111 is exposed to the outside is formed in the insulation portion 120. The opening 121 is formed through, for example, a laser process or etching process. In a case where the pad portion 111 is provided with three pad portions, the opening 121 may also be configured with three openings to allow the respective pad portions 111 to be exposed therethrough. Meanwhile, the process of forming the opening 121 in the insulation portion 120 is not necessarily included. For example, in a case where an insulation portion 120' is formed to only cover a portion of one surface of the conduction portion 110 as described in FIG. 3, the pad portion 111 may be exposed to the outside without any separate process of forming an opening.

The pad portion 111, the connection portion 112 and the pattern portion 113 are separated from the frame portion 115 by cutting the support portion 114 coupling the pad portion 111, etc. to the frame portion 115. Thus, the pad portion 111, the connection portion 112, and the pattern portion 113 are separated from one another or coupled to one another through the electronic device 130 and the wiring portion 140, thereby performing the function of a circuit pattern. In this case, the insulation portion 120 is first formed, and the support portion 114 is then cut. Hence, the outer surface of the end of the support portion 114 are exposed to the outside of the insulation portion 120. The outer or exposed surface of the end of the support portion 114 form for example the same plane as (i.e., may be coplanar with) a surface of the insulation portion 120 (shown in FIG. 1).

Meanwhile, the process of forming the opening 121 and the process of cutting the support portion 114 may be performed regardless of a processing order, and the protection apparatus according to this embodiment may be manufactured through both processes. In this case, unlike the existing protective circuit module formed by plating a circuit pattern on an insulative material, the protective circuit module of the present invention is formed using a method of previously patterning one conduction plate and covering the conduction plate with the insulation portion 120. Accordingly, it is possible to more precisely and conveniently manufacture the protection apparatus 100 and to implement the miniaturization of the protection apparatus 100.

FIG. 9 is an exploded perspective view of a battery pack 200 having the protection apparatus 100 according to an embodiment of the present invention. Hereinafter, the battery pack 200 according to this embodiment will be described with reference to FIG. 9.

As shown in FIG. 9, the battery pack 200 according to this embodiment includes a bare cell 210 and the protection apparatus 100 provided at one side of the bare cell 210.

The bare cell 210 generates electrochemical energy through the movement of ions or electrons. The bare cell 210 is for example manufactured by accommodating an electrode assembly and an electrolyte in a battery case. Here, the electrode assembly is formed by winding or stacking a positive electrode plate, a negative electrode plate and a separator interposed between these electrode plates. The electrode assembly generates energy through an electrochemical reaction between the electrode assembly and the electrolyte, and the generated energy is transmitted to the outside through a negative electrode terminal 211 formed on an upper surface of the bare cell 210 and a positive electrode terminal or can (not shown). For example, the battery case may be a pouch-type, prismatic or cylindrical case.

The protection apparatus is for example the protection apparatus 100 shown in FIG. 1 or 3. The protection apparatus 100 includes the conduction portion 110 and the insulation portion 120, and the pad portion 111 and the connection portion 112 are positioned on the same plane. In the protection apparatus 100, the conduction portion 110 is formed from one conduction plate. Hence, unlike the existing protection apparatus, the protection apparatus 100 according to the invention is positioned at only one side of the bare cell 210 by decreasing the size thereof. For example, the protection apparatus 100 is positioned to be biased to any one side, based on the negative electrode terminal 211 positioned at the center of the bare cell 210, and accordingly, it is possible to implement the miniaturization of the protection apparatus 100. In this case, the B- connection portion 112b is coupled to the negative electrode terminal 211 of the bare cell 210, and the B+ connection portion 112a is coupled to the can or housing of the bare cell 210. Meanwhile, for example, a positive temperature coefficient (PTC) device is further positioned between the connection portion 112 and the bare cell 210. Accordingly, if the heat generated from the battery pack 200 is excessive, the power between the bare cell 210 and the protection apparatus 100 is cut off, thereby improving the safety of the battery pack 200.

An upper cover 220 covering the protection apparatus 100 is positioned at an upper portion of the bare cell 210 having the protection apparatus 100 mounted thereto, so as to protect the protection apparatus 100 from the outside. In this case, an opening 221 may be formed in the upper cover 220, and the pad portion 111 of the conduction portion 110 is exposed to the outside through the opening 221 so as to be coupled to an external device, thereby supplying the power of the battery pack 200 to the external device.

While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and equivalents thereof.

## Claims

1. Protection apparatus (100) for a battery pack (200), the protection apparatus (100) comprising:
a conduction portion (110) comprising a pad portion (111) and a connection portion (112) outside of the pad portion (111) and electrically coupled to the pad portion (111), and
an insulation portion (120) covering at least a portion of the conduction portion (110),
wherein the pad portion (111) and the connection portion (112) are coplanar.

2. Protection apparatus (100) according to claim 1, wherein the conduction portion (110) further comprises a pattern portion (113) electrically coupled to the pad portion (111) and the connection portion (112).

3. Protection apparatus (100) according to any of claims 1 or 2, further comprising an electronic device (130) positioned on the conduction portion (110), wherein the insulation portion (120) covers the electronic device (130).

4. Protection apparatus (100) according to claim 3, wherein different sections of the conduction portion (110) are electrically coupled to each other through the electronic device (130).

5. Protection apparatus (100) according to any of claims 1 to 4, further comprising a wiring portion (140) coupling different sections of the conduction portion (110) to each other.

6. Protection apparatus (100) according to any of claims 1 to 5, wherein at least a first portion of the connection portion (112) is covered by the insulation portion (120), and at least a second portion of the connection portion (120) is exposed with respect to the insulation portion (120).

7. Protection apparatus (100) according to any of claims 1 to 6, wherein the conduction portion (110) further comprises a support portion (114) that is at least partially covered by the insulation portion (120), and an end of the support portion (114) is exposed with respect to the insulation portion (120), and
wherein an exposed surface at the end of the support portion (114) is coplanar with a surface of the insulation portion (120).

8. Protection apparatus (100) according to any of claims 1 to 7, wherein the insulation portion (120) comprises an opening (121) through which the pad portion (111) is exposed.

9. Battery pack (200) comprising a protection apparatus (100) according to any of claims 1 to 8.

10. Battery pack (200) according to claim 9, further comprising a bare cell (210) having a negative electrode terminal (211) at an upper surface thereof, and the connection portion (112) is coupled to the negative electrode terminal (211), and
wherein the protection apparatus (100) is biased to one side of the bare cell (210), based on the negative electrode terminal (211).

11. Method for manufacturing a protection apparatus (100) for a battery pack (200), the method comprising:
patterning a conduction plate to form a conduction portion (110), the conduction portion (110) comprising a pad portion (111) and a connection portion (112) outside of the pad portion (111); and
forming an insulation portion (120) over at least a portion of the conduction portion (110).

12. Method according to claim 11, further comprising positioning an electronic device (130) on the conduction portion (110), after forming of the conduction portion (110), and wherein sections of the conduction portion (110) are electrically coupled to each other through the electronic device (130).

13. Method according to any of claims 11 or 12, further comprising electrically coupling portions of the conduction portion (110) through a wiring portion (140), after forming the conduction portion (110).

14. Method according to any of claims 11 to 13, further comprising forming an opening (121) through the insulation portion (120) to expose the pad portion (111), after forming the insulation portion (120).

15. Method according to any of claims 11 to 14, wherein forming the conduction portion (110) further comprises:
forming a frame portion (115) at a periphery of the pad portion (111) and the connection portion (112); and
forming a support portion (114) coupling the frame portion (115) to the pad portion (111) and the connection portion (112);
and further comprising cutting the support portion (114), after forming of the insulation portion (120), to separate the pad portion (111) and the connection portion (112) from the frame portion (115).
